# EUROPÄISCHE PATENTSCHRIFT

(11) **EP 1 571 462 B1**
(45) Veröffentlichungstag und Bekanntmachung des Hinweises auf die Patenterteilung: **28.06.2017**
(21) Anmeldenummer: 05001089.1
(22) Anmeldetag: 20.01.2005
(51) Int. Cl.: G01S 7/292, G01S 7/41

(54) **Verfahren zur Auswertung von Radardaten zum vollautomatischen Erstellen einer Karte gestörter Gebiete**
Method of analysis of radar data for drawing up automatically a map of jammed areae
Procédé d'analyse de données radar pour l'élaboration automatique d'une carte de zones perturbées

(30) Priorität: 04.03.2004 DE 102004010537
(43) Veröffentlichungstag der Anmeldung: 07.09.2005
(73) Patentinhaber: Airbus DS Electronics and Border Security GmbH, 82024 Taufkirchen (DE)
(72) Erfinder: Liebscher, Dirk, Dr., 89077 Ulm (DE); Altmann, Juergen, Dr., 89077 Ulm (DE); Lode, Ulrich, Dr., 89077 Ulm (DE); Schenk, Christoph, 89231 Ulm (DE)
(74) Vertreter: LifeTech IP Spies & Behrndt Patentanwälte PartG mbB

(56) Entgegenhaltungen:
- EP-A- 0 126 032
- DE-A1- 3 108 594
- DE-A1- 19 600 086
- US-A- 3 325 806
- US-A- 4 068 231
- US-A- 4 555 703
- US-A- 5 341 141
- US-A- 5 798 728

## Beschreibung

Die Erfindung betrifft ein Verfahren zur Auswertung von Radardaten zum vollautomatischen Erstellen einer Karte gestörter Gebiete.

Bei Verfahren zur Auswertung von Radarsignalen tritt das Problem auf, dass neben den erwünschten Echos von Schiffen und Flugzeugen (Echtziele) auch immer eine Vielzahl unerwünschter Reflexionen von Wellen, Boden, Wolken, Windrädern, Autos o.ä. (Falschziele) empfangen werden. Bei der Erstellung eines Lagebildes, bei der die jeweils zu einem Ziel gehörenden Echos aus den unterschiedlichen Umläufen der Antenne zu einer Zielspur zusammengefügt werden, entstehen aus den unerwünschten Reflexionen so genannte Falschspuren. Diese stören das ansonsten stabile Lagebild, verwirren den Operator, und können so zu Fehlentscheidungen führen. Das Problem ist um so gravierender, je kürzer die geforderte Initüerungszeit ist, also die Zeit, die vom ersten Echo bis zur Darstellung einer Zielspur am Bildschirm verstreichen darf.

Moderne Radarsysteme versuchen unter Zugriff auf verschiedene Karten, auf denen gestörte Gebiete eingezeichnet sind, Falschspuren auch bei kurzen Initüerungszeiten zu unterdrücken. Hierzu wird in Gebieten wie Straßen oder Windparks eine Sonderbehandlung durchgeführt, die z.B. in einem Initüerungsverbot besteht. Derartige Verfahren sind z.B. in der Studienveröffentlichung: Feasibility of mitigating the effects of wind farms on primary radar, ETSU W/14/00623/REP, DTI (Department of Trade and Industry) UK, PUB URN No. 03/976, 2003) beschrieben.

Die bekannten Radar-Auswerteverfahren mit spezieller Berücksichtigung gestörter Gebiete haben ein oder mehrere der folgenden Nachteile:
- die Karteninformationen müssen manuell eingeben und aktualisiert werden,
- sie basieren ausschließlich auf der Analyse von Einzelechos und beinhalten auch die Gebiete, in denen erwünschte Echos gehäuft auftreten. Das sind z.B. Flugstrassen und Seewege, in denen eine sichere Initüerung besonders wichtig ist.
- sie beeinflussen die Entdeckungswahrscheinlichkeit des Systems negativ, was für militärische Anwendungen nicht akzeptabel ist.
sie sind mit einem erheblichen technischen und finanziellen Aufwand verbunden.

DE 3108594 A1 beschreibt einen Pulsdopplerempfänger zur Anwendung innerhalb eines rechnergesteuerten Multifunktionsradars mit einer elektronisch phasengesteuerten Gruppenantenne.

US 5341141 A beschreibt ein abbildendes Radarsystem sowie ein Verfahren zur Erzeugung und Verarbeitung von Radarinformationen, um 3D-Bilder eines Objekts zu erzeugen.

EP 0 126 032 A beschreibt ein Gerät zur Identifizierung und Unterdrückung von unerwünschten Echos von Zweitspuren in Radarsystemen.

US 5798728 A beschreibt eine Signalverarbeitungsgerät für ein Such oder Verfolgungsradar, welches im empfangenen Signal Clutter und Rauschen unterdrückt, um die Detektion eines Ziels zu ermöglichen.

DE 19600086 A1 beschreibt ein Verfahren zur Erkennung von Radarzielen. Dabei werden im Videobereich mittels einer vorgebbaren Reduktionsschwelle aus einem vorgebbaren Überwachungsgebiet lediglich die Auflösungszellen mit den größten Amplitudenwerten ausgewählt und daraus mittels eines Cluster- sowie eines Clutterdetektors die dem Überwachungsgebiet gehörende Clutterschwelle bestimmt.

US 4555703A beschreibt ein Radar-System zur Detektion von Echos variabler Entfernung, die auf Umwelteinflüsse zurückgehen, und Klassifikation der Ursprünge der Echos als Kurz-Puls Interferenz, Regen-Clutter oder Störung, verteilter Land-Clutter, isolierte Ziele oder thermisches Rauschen.

US 4068231 A beschreibt ein Kartierungsgerät zur Anwendung in Radarsystemen. Das Gerät nutzt eine Gebiet-Überlappungsmethode zur Unterdrückung von Clutter aufgrund Szintillations-Positionen.

US 3325806 A beschreibt ein Gerät zur Unterdrückung der Verarbeitung von Nicht-Ziel Echos von bestimmten Gebieten der Szene. Wenn ein Ziel konsistent im selben Gebiet gefunden wird, wird es als stationäres Echo erkannt und von der Verarbeitung ausgeschlossen.

Der Erfindung liegt die Aufgabe zugrunde, ein Verfahren zu schaffen, das eine Karte von Gebieten mit unerwünschten Reflexionen vollautomatisch erstellt und aktualisiert, wobei mit Hilfe der Karteninformationen eine sichere Unterscheidung zwischen Falschzielen und Echtzielen ermöglicht wird.

Diese Aufgabe wird mit dem Verfahren nach Patentanspruch 1 gelöst. Vorteilhafte Ausführungen sind Gegenstand von Unteransprüchen.

Erfindungsgemäß wird die Karte nicht auf Basis einzelner Echos, sondern auf Basis von Zielspuren angelegt. Die grundlegende Annahmen besteht darin, dass jede kurzlebige Zielspur (z.B. über weniger als 10 Antennenumläufe), also auch die eingeschlossen, die nicht initiiert werden und somit auch nicht auf den Bildschirm gelangen, von einem unerwünschtem Ziel ausgegangen ist.

Man unterteilt das zu kartierende Gebiet in Zellen, in denen jeweils die dort entstandenen kurzlebigen Zielspuren gezählt werden.

Es wird eine Alterung der Karte vorgesehen, derart, dass nur solche kurzlebige Zielspuren in der Zählung berücksichtigt werden, die jünger als eine vorbestimmte Zeitspanne (abhängig von der Anzahl der Echos typischerweise zwischen 5 Minuten und 2 Stunden) sind. Alle älteren kurzlebigen Zielspuren werden nicht berücksichtigt. Auf diese Weise ist die erfindungsgemäß gewonnene Karteninformation nicht fest, sondern passt sich adaptiv an die aktuelle Situation an, z.B. bei Änderungen in den Umweltbedingungen wie Wolken, Regen oder Windstärke.

Eine Zelle gilt dann als markiert, d.h. wird in der Karte als gestörtes Gebiet ausgewiesen, wenn dieser Wert einen gewissen Schwellwert übersteigt. Bei der Radarauswertung unter Zugriff auf die Informationen einer solchen Karte werden Echos, die aus markierten Zellen stammen, einer Sonderbehandlung unterworfen, z.B. in dem die Trackinitüerung verzögert wird.

Durch Festlegung mehrerer Schwellwerte erreicht man, dass eine Zelle unterschiedliche Grade der Markierung erreichen kann. Man gewinnt auf diese Weise also nicht nur eine Schwarz/Weiß-Karte, sondern eine Graustufen-Karte mit mehreren Graden hinsichtlich der Störung des zu kartierenden Gebiets. Je höher der Grad der Einstufung einer Zelle als gestörtes Gebiet ist, desto schärfere Anforderungen werden an den Spurbildungsprozess gestellt, z.B. indem eine höhere Anzahl von Antennenumläufen für die Entscheidung Echtziel/Falschziel berücksichtigt werden muss.

Vorteile der Erfindung:
- Die Erstellung und Aktualisierung der Karte erfolgt automatisch. Eine manuelle Pflege der Karte ist nicht erforderlich.
- Flugkorridore oder Seewege werden nicht tangiert, da die hier entstehenden Zielspuren stabil über einen großen Zeitraum (entsprechend einer größeren Anzahl von Antennenumläufen) bestehen und somit nicht in der Karte erfasst werden.
- Bei Einsatz der erfindungsgemäß generierten Karte in einem Radarauswerteverfahren kann die Bildung unerwünschter Zielspuren zuverlässig unterdrückt werden. Andererseits ist die Detektion erwünschter Ziele in den als gestört gekennzeichneten Gebieten weiterhin möglich.

Eine auftretende kurzlebige Zielspur kann auf verschiedene Weise in die Zählung eingehen. Zum Beispiel ist es möglich, dass eine kurzlebige Zielspur aufgrund der Position ihres Startpunkts einer Zelle der Karte zugeordnet wird.

Alternativ ist es möglich, dass die kurzlebige Zielspur aufgrund der Lage ihres Endpunkts einsortiert wird.

Es ist aber auch möglich, dass dieselbe kurzlebige Zielspur mehrmals gezählt wird, in dem ein Eintrag sowohl für den Startpunkt als auch für den Endpunkt einer Zielspur erfolgt, wobei Startpunkt und Endpunkt in verschiedenen Zellen auftreten können. Analog können auch sämtliche zu einer kurzlebigen Zielspur beitragenden Echos in die Zählung eingehen.

In einer weiteren Ausführung der Erfindung kann ein Zählereignis neben der Zelle, in der es tatsächlich auftritt, zusätzlich in einer oder mehreren Nachbarzellen gezählt werden. Dies dient zur Glättung, um die Ausbildung einzelner diskreter Spitzen innerhalb der Karte zu vermeiden.

Ein Schwellwert kann fest vorgegeben werden. Alternativ kann er jedoch auch automatisch, auf der Basis der vorliegenden Messdaten generiert werden. Eine geeignete Bedingung zur automatischen Generierung eines Schwellwerts ist z.B., dass die Zahl der nicht zu Echtzielen korrelierten Echos, welche in nicht markierten Zellen liegen, im Mittel einen vorgegebenen Wert erreicht.

Zur Veranschaulichung ist eine Fig. angefügt, die eine erfindungsgemäße Karte mit zwei Schwellwerten zeigt. Die markierten Zellen sind auf eine geographische Karte projiziert.

Die Zähler der schwarz dargestellten Zellen liegen oberhalb eines ersten Schwellwerts und unterhalb eines zweiten Schwellwerts, die der grauen Zellen oberhalb des zweiten Schwellwerts. Die Zellengröße beträgt in diesem Fall etwa 400 x 400 m.

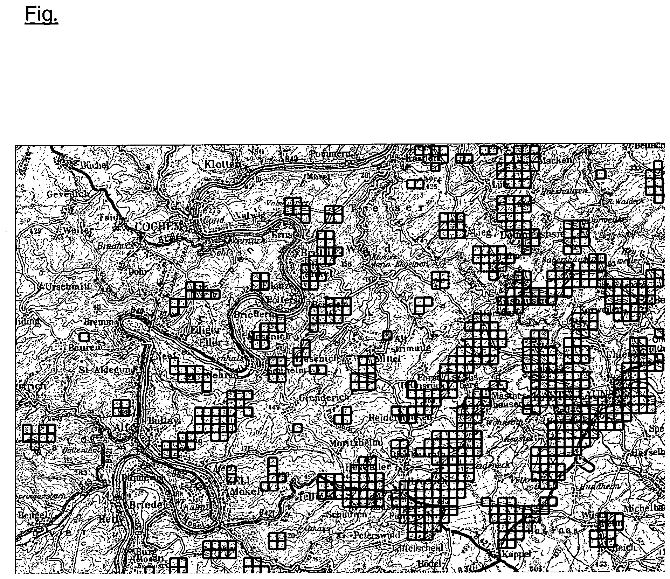

## Patentansprüche

1. Verfahren zur Auswertung von Radardaten zum vollautomatischen Erstellen einer Karte gestörter Gebiete, in denen gehäuft unerwünschte Reflexionen, auftreten, **gekennzeichnet durch** folgende Verfahrensschritte:
- Aufteilung des zu kartierenden Gebietes in Zellen,
- Zählung der in diesen Zellen auftretenden kurzlebigen Zielspuren,
- Führen einer Statistik derart, dass die kurzlebigen Zielspuren nur innerhalb eines vorgegebenen Zeitraums gezählt werden, während alle älteren kurzlebigen Zielspuren unberücksichtigt bleiben,
- Vorgabe mindestens eines Schwellwerts derart, dass eine Zelle als markiert gilt, falls die Anzahl der in dem zurückliegendem Zeitraum gezählten kurzlebigen Zielspuren den oder die Schwellwerte übersteigen,
wobei sich die Karte der aktuell gestörten Gebiete als Gesamtheit der markierten Zellen ergibt.

2. Verfahren nach Anspruch 1, **dadurch gekennzeichnet, dass** eine kurzlebige Zielspur mit einem der folgenden Merkmale in die Zählung eingeht:
- Endpunkt, oder
- Startpunkt und Endpunkt, oder
- eines, mehrere oder alle der zu der kurzlebigen Zielspur korrelierten Echos.

3. Verfahren nach einem der Ansprüche 1 oder 2, **dadurch gekennzeichnet, dass** ein Zählereignis neben der Zelle, in der es tatsächlich auftritt, zusätzlich in einer oder mehreren Nachbarzellen gezählt wird.

4. Verfahren nach einem der vorhergehenden Ansprüche, **dadurch gekennzeichnet, dass** ein Schwellwert fest vorgegeben wird oder derart automatisch berechnet wird, dass die Zahl der nicht zu Echtzielen korrelierten Echos, welche in nicht markierten Zellen liegt, im Mittel einen vorgegebenen Wert erreicht.

5. Verfahren nach einem der vorhergehenden Ansprüche, **dadurch gekennzeichnet, dass** mehrere Schwellwerte vorgegeben werden, die unterschiedliche Grade der Störung eines Gebiets wiedergeben.

6. Verfahren nach einem der vorangehenden Ansprüche, **dadurch gekennzeichnet, dass** unter Zugriff auf die Informationen der generierten Karte eine Unterdrückung von unerwünschten Falschspuren durchgeführt wird.

7. Verfahren nach Anspruch 6, **dadurch gekennzeichnet, dass** bei einer Karte, die mit mehreren Schwellwerten generiert worden ist, sich die höheren Grade der Störung verschärfend auf den Spurbildungsprozess auswirken.

## Claims

1. Method for evaluating radar data for the fully automatic creation of a map of regions with interference, in which undesired reflections frequently occur, **characterized by** the following method steps:
- dividing up the region to be mapped into cells,
- counting the number of short-lived target tracks occurring in these cells:
- keeping statistics in such a way that the short-lived target tracks are counted only within a predefined time period while all older short-lived target tracks remain unconsidered,
- predefining at least one threshold value in such a way that a cell counts as marked if the number of short-lived target tracks counted in the previous time period exceeds the threshold value or values,
wherein the map of the regions currently having interference results as the totality of the marked cells.

2. Method according to Claim 1, **characterized in that** a short-lived target track having one of the following features is incorporated in the counting:
- end point or
- starting point and end point or
- one, several or all of the echoes correlated with the short-lived target track.

3. Method according to either of Claims 1 and 2, **characterized in that** a counter event beside the cell in which it actually occurs is additionally counted in one or more adjacent cells.

4. Method according to one of the preceding claims, **characterized in that** a threshold value is fixedly predefined or is calculated automatically in such a way that the number of echoes not correlated with real targets which lies in non-marked cells reaches a predefined value on average.

5. Method according to one of the preceding claims, **characterized in that** a plurality of threshold values which reproduce different levels of the interference in a region are predefined.

6. Method according to one of the preceding claims, **characterized in that** with access to the information from the generated map, suppression of undesired false tracks is carried out.

7. Method according to Claim 6, **characterized in that** in the case of a map which has been generated with a plurality of threshold values, the higher levels of interference have a sharpening effect on the track forming process.

## Revendications

1. Procédé destiné à évaluer des données radar pour l'élaboration automatique d'une carte de zones perturbées dans lesquelles se produisent fréquemment des réflexions non souhaitables, **caractérisé par** les étapes de procédé suivantes :
- du fractionnement de la zone à cartographier en cellules,
- du comptage des traces cibles éphémères qui apparaissent,
- de l'établissement de statistiques, de sorte à ne compter les traces cibles éphémères que dans une période prédéfinie, tout en ne considérant pas toutes les traces cibles éphémères plus anciennes,
- de la prédéfinition d'au moins une valeur seuil, de sorte qu'une cellule est considérée comme étant marquée si le nombre des traces cibles éphémères compté dans la période précédente dépasse la ou les valeur(s) seuil(s),
la carte des zones actuellement perturbées résultant de la totalité des cellules marquées.

2. Procédé selon la revendication 1, **caractérisé en ce qu'**une trace cible éphémère comportant l'une des caractéristiques suivantes est considérée dans le domptage
- point d'arrivée ou
- point de départ et d'arrivée ou
- un, plusieurs ou tous les échos en corrélation avec la trace cible éphémère.

3. Procédé selon l'une quelconque des revendications 1 ou 2, **caractérisé en ce qu'**un événement de comptage à côté de la cellule dans laquelle il se produit réellement est compté en supplément dans une ou dans plusieurs cellules voisines.

4. Procédé selon l'une quelconque des revendications précédentes, **caractérisé en ce qu'**une valeur seuil est fixement prédéfinie ou calculée automatiquement, de telle sorte que le nombre des échos non corrétés en cibles réelles qui se situe dans des cellules non marquées atteint en moyenne une valeur prédéfinie.

5. Procédé selon l'une quelconque des revendications précédentes, **caractérisé en ce que** plusieurs valeurs seuils sont prédéfinies qui reproduisent différents niveaux de la perturbation d'une zone.

6. Procédé selon l'une quelconque des revendications précédentes, **caractérisé en ce qu'**en accédant aux informations de la carte générée, il est procédé à une suppression de fausses traces non souhaitables.

7. Procédé selon la revendication 6, **caractérisé en ce que** sur une carte qui a été générée avec plusieurs valeurs seuils, les plus hauts niveaux de la perturbation ont un effet intensifiant sur le processus de formation de traces.
